# EUROPEAN PATENT APPLICATION

(11) **EP 4 775 338 A1**
(43) Date of publication of application: **15.07.2026**
(21) Application number: 25150957.6
(22) Date of filing: 09.01.2025
(51) Int. Cl.: B23B 51/00

(54) **EXCHANGEABLE HEAD DRILL**

(71) Applicant: AB Sandvik Coromant, 811 81 Sandviken (SE)
(72) Inventor: ENGSTRÖM, Tord, 811 81 Sandviken (SE)
(74) Representative: Sandvik

(57) **Abstract**

An exchangeable head drill support body (1) comprises at an axially forward end and two axially forwardly extending towers (20). The towers are spaced apart about the longitudinal axis (10). Each tower has a respective non-threaded through hole (21), extending radially. The hole is defined by a respective inner peripheral surface (71) having a first portion (31) and a, radially outside provided, second portion (32). In each of the towers, a first cross-section (72) of the inner peripheral surface of the first portion in a first tangential plane (73) has a center of gravity (74). In each of the towers, the second portion presents geometrical structures that are non-symmetric with respect to a first radial axis (13). The first radial axis passes the respective center of gravity.

A threaded insert.

An exchangeable head drill support body arrangement.

## Description

### TECHNICAL FIELD

The present invention relates in general to a cutting tool and in particular to an exchangeable head drill support body and a threaded insert thereto.

### BACKGROUND

When performing a cutting process, a cutting edge is moved in contact relative to a workpiece to be processed. The cutting edge typically removes some material from the workpiece. It is advantageous to have a cutting edge that has high abrasive resistance. The cutting edges are therefore normally manufactured from hard materials, which typically are expensive and often difficult to form. When the cutting edge is worn out, it is typically discarded.

In order to reduce the amount of expensive materials, it is commonly used to have a small cutting insert removably held by a support body. When the cutting edge is worn out, the cutting insert can simply be exchanged for a new one, thereby reusing the support body. This type of tools is often referred to as exchangeable head drill tools solutions. The exchangeable head drills can be made in several different styles. One common style includes a drill tip screw that locks the cutting insert, i.e. the exchangeable head, in between two upstanding towers. The drill tip screw passes through a hole in the exchangeable head. One of the towers has a recess for the screwhead and the other tower has a threaded hole. The screw joint presses the towers against the exchangeable head for fixating the positions.

By arranging the drill tip screw to exert a force on the lower inner part of the hole through the drill tip, the drill tip screw is pre-stressed to secure the drill tip in several directions. One example of such a cutting tool is disclosed in the published US patent application US 2022/0339710 A1, where an offset distance between a threaded hole in one tower (or finger) and a symmetry axis of a hole in the opposite tower causes the drill tip screw to be in contact with a lower part of the exchangeable head and exerts a force thereon. At the same time, the drill tip screw also applies an inwards directed force on the towers, bending the towers to grip the drill tip sidewards.

According to this approach, drill tips are known to be worn and are intended to be exchanged after some time of use. However, also the support body is worn. This wear is of a lesser extent, and the support body is expected to endure use corresponding to a considerable number of worn drill tips. However, the wear of the support body cannot be completely ignored. The drill tip is clamped between tip seat lands on the support body, which will define the exact position of the cutting edges of the drill tip with reference to the main structure of the support body. After some use, the tip seat lands will be worn, and the deformation of the towers required for clamping a new drill tip will be somewhat different compared to the unworn support body. It has been experienced that the exact position of the cutting edges of the drill tip with reference to the main structure of the support body presents small changes for worn support bodies. These changes in cutting edge positions are indeed very small, but also important, which tends to provoke frequent changes also of the support body, even for moderately worn tip seat lands. Since the support bodies are expensive in comparison with the drill tips, the benefits of having an exchangeable structure will not be used to its full potential.

It is thus requested to find improved solutions of fastening a drill tip at an exchangeable head drill support body.

### SUMMARY

A general object is to prolong the lifetime of exchangeable head drill tools, in particular of the exchangeable head drill support body.

The above object is achieved by methods and devices according to the independent claims. Preferred embodiments are defined in dependent claims.

In general words, in a first aspect, an exchangeable head drill support body extends along a longitudinal axis. The exchangeable head drill support body comprises at an axially forward end, two axially forwardly extending towers. The towers are spaced apart about the longitudinal axis so as to define a jaw configured for enabling releasably mounting of a drill tip between at least a radially facing tip seat land of the respective tower. Each tower has a respective non-threaded through hole. The respective non-threaded through hole extends radially, with respect to the longitudinal axis of the exchangeable head drill support body The respective non-threaded through hole is defined by a respective inner peripheral surface. Each of the inner peripheral surfaces defining the non-threaded through holes has a respective first portion and a respective second portion. The second portion is located radially outside, with respect to the longitudinal axis, the respective first portion. In each of the towers, a respective first cross-section of the respective first portion of the inner peripheral surface in a respective first tangential plane, with respect to the longitudinal axis, has a respective center of gravity. In each of the towers, the respective second portion of the respective inner peripheral surface presents geometrical structures that are non-symmetric with respect to a first radial axis. The first radial axis passes the respective center of gravity of the respective first cross-section of the respective inner peripheral surfaces.

In a second aspect, a threaded insert for an exchangeable head drill comprises an outer peripheral surface and an inner peripheral surface. The outer peripheral surface comprises at least a first part with a general symmetry with respect to a first insert axis. The inner peripheral surface defines a circular hole, with respect to a second insert axis, with an inner threading. The first insert axis and the second insert axis are parallel but offset by a non-zero offset distance.

In a third aspect, an exchangeable head drill support arrangement comprises a threaded insert according to the second aspect inserted into a non-threaded through hole of a tower of an exchangeable head drill support body according to the first aspect.

One advantage with the proposed technology is that radial flexural properties of the two towers are ensured to be symmetric to each other, while a threaded part for the engagement with the drill tip screw is provided in an easily exchangeable manner. This increases the life of the exchangeable head drill support body considerably. Other advantages will be appreciated when reading the detailed description.

### BRIEF DESCRIPTION OF THE DRAWINGS

The invention, together with further objects and advantages thereof, may best be understood by making reference to the following description taken together with the accompanying drawings, in which:
FIG. 1 is a schematic drawing of an embodiment of an exchangeable head drill tool;
FIG. 2 is an enlarged part of the front end of the exchangeable head drill tool of Fig. 1;
FIG. 3 is a schematic view of how a drill tip is mounted;
FIG. 4 is a cross-sectional view of an embodiment of an exchangeable head drill support body;
FIG. 5 illustrates schematically a cross-sectional view of an embodiment of a threaded insert 4 for an exchangeable head drill;
FIG. 6 is an elevational view of an embodiment of a threaded insert;
FIG 7 is a cross-section view of a drill tip screw in an embodiment of an exchangeable head drill support body and a threaded insert fixating a drill tip;
FIG. 8 is a cross-section view of a drill tip in an embodiment of an exchangeable head drill support body and a threaded insert before any drill tip screw is mounted; and
FIG. 9 is a view from the top of a drill tip mounted in an exchangeable head drill support body.

### DETAILED DESCRIPTION

Throughout the drawings, the same reference numbers are used for similar or corresponding elements.

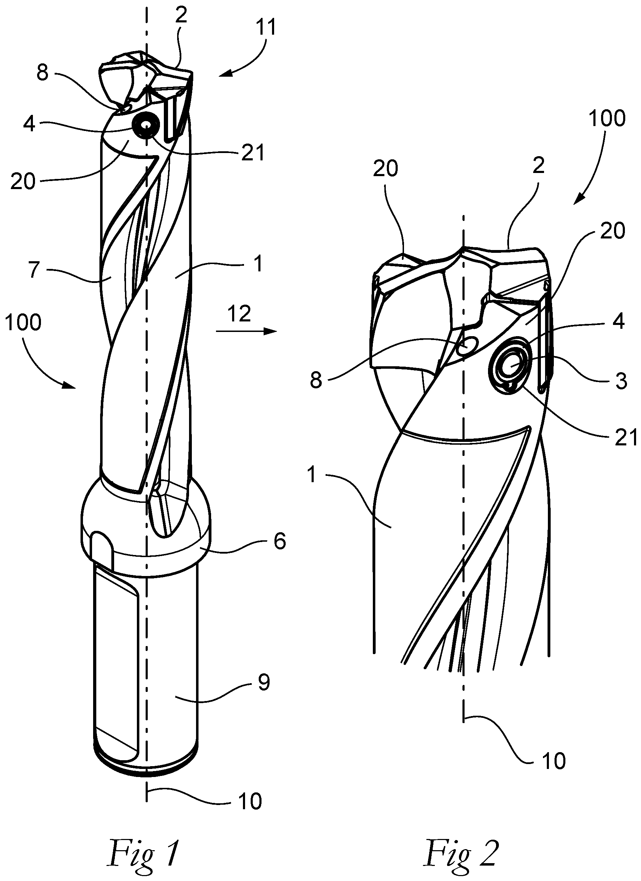

For a better understanding of the proposed technology, it may be useful to begin with a brief overview of a typical exchangeable head drill tool. Figure 1 illustrates schematically an embodiment of an exchangeable head drill tool 100. The exchangeable head drill tool 100 is generally extended along a longitudinal axis 10. The exchangeable head drill tool 100 comprises an exchangeable head drill support body 1 extending between an axially rear end and an axially forward end 11. A drill tip 2 is fastened to the exchangeable head drill support body 1 by means of a drill tip screw 3 at the axially forward end 11. The drill tip 2 is inserted into a jaw space, also denoted as tip seat or insert seat, between two towers 20 protruding forwardly from the exchangeable head drill support body 1. The drill tip screw 3 is inserted through a hole in one of the towers 20, through a hole in the drill tip 2 and is fastened by a threaded insert 4 in a hole of the other one of the towers 20. This arrangement firmly secures the drill tip 2 to the exchangeable head drill support body 1.

The exchangeable head drill support body 1 of this embodiment is further designed to support the drill tip 2 in its cutting action. To this end, the exchangeable head drill support body 1 presents a chip flute 7 in which cutoff material can be transported away from the cutting region during operation. Additional functionalities such as cooling of the cutting region may be provided e.g. by cooling channels 8 in the towers 20. The exchangeable head drill support body 1 is furthermore designed to be inserted into a cutting machine by means of a generally cylindrical coupling shank 9 and a correct mounting may be assured by a height depth stop collar 6. Figure 1 illustrates one typical embodiment, but the present ideas are not restricted only to that embodiment. The present ideas are applicable to most exchangeable head drill tools 100 based on the mounting of a drill tip 2 between towers 20 of an exchangeable head drill support body 1 by means of a drill tip screw 3.

Figure 2 illustrates the front end 5 in an enlarged view.

It has been found that some of the problems in prior-art exchangeable head drill tools with changes in cutting edge positions of the drill tip already at relatively moderate wear levels can be related to the elastic behavior of the towers. When the tip seat lands are worn, the towers have to be deformed more in order to secure a fastening of the drill tip. However, since, in most prior art arrangements, one of the towers comprises a hole presenting threading while the other tower comprise a hole adapted for accommodating the screw head of the drill tip screw, the elastic behaviors of the two towers are not identical. This means that in order to compensate for the wear of the tip seat lands, one of the towers typically bends more than the other, leading to an unwanted displacement of the cutting edge of the drill tip. This limits the drill body tool life and reduces the performance of the tool during its life.

It is now instead suggested to provide an exchangeable head drill support body 1 with two towers 20 that have the same flexural elasticity of the towers 20.

In a preferred embodiment, the towers 20 have shapes that are mirrors to each other with respect to the longitudinal axis 10.

Furthermore, the towers are provided with non-threaded holes and instead a threaded insert is used for providing a threading for the drill tip screw.

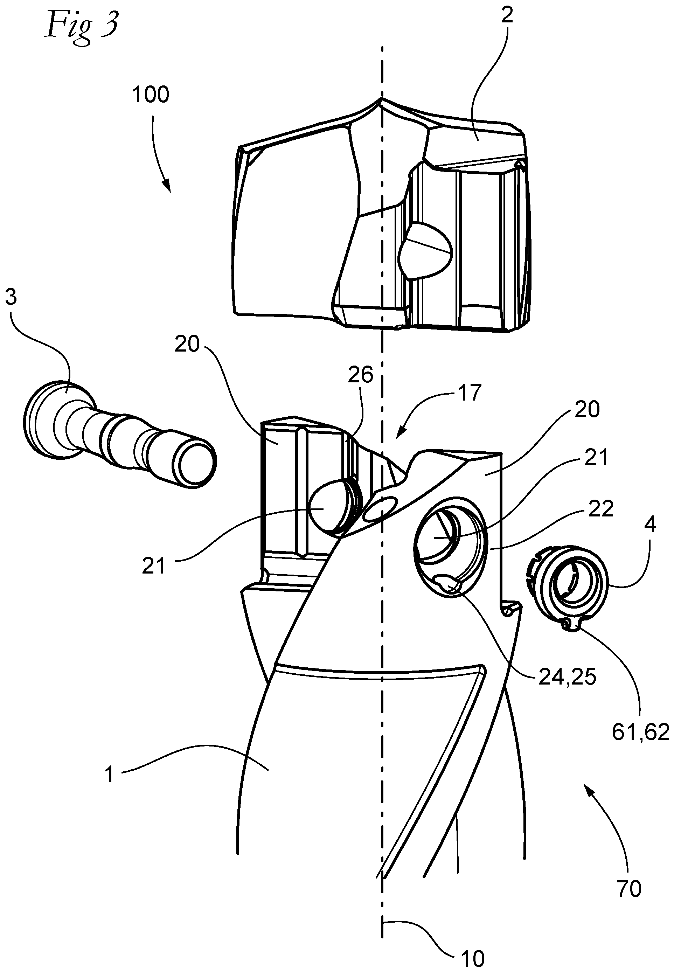

Figure 3 illustrates schematically how an embodiment of a drill tip is mounted in an embodiment of an exchangeable head drill support body 1. An embodiment of an exchangeable head drill support arrangement 70 comprises a threaded insert 4, according to any of the below described embodiment, inserted into a non-threaded through hole 21 of a tower 20 of an exchangeable head drill support body 1 according to any of the embodiments described in the present disclosure.

The exchangeable head drill support body 1 extends along the longitudinal axis 10. The exchangeable head drill support body 1 comprises two towers 20. The towers 20 are provided at an axially forward end of the exchangeable head drill support body 1 and are extending forward in the axial direction. The towers 20 are spaced apart about the longitudinal axis 10 so as to define a jaw 17 configured for enabling releasably mounting of a drill tip 2 between at least a radially facing tip seat land 26 of the respective tower 20. Each tower 20 has a respective non-threaded through hole 21 extended radially, with respect to the longitudinal axis 10 of the exchangeable head drill support body 1.

Upon mounting, the drill tip 2 is inserted in the jaw 17 between the two towers 20 and the drill tip screw 3 is inserted through the hole 21 of one of the towers and into the hole of the drill tip 2. Thereby the inner surface of the hole in the drill tip 2 comes into contact with the drill tip screw 3 and due to the deliberate misalignment, a force will act between the inner surface and the center portion of the drill tip screw 3, keeping the drill tip 2 in place. The outer threading 18 of the drill tip screw 3 is engaged into an inner threading 54 of a threaded insert 4 to be inserted into the hole 21. The screw force will also clamp the drill tip 2 between the two towers 20 in order to achieve a rigid connection.

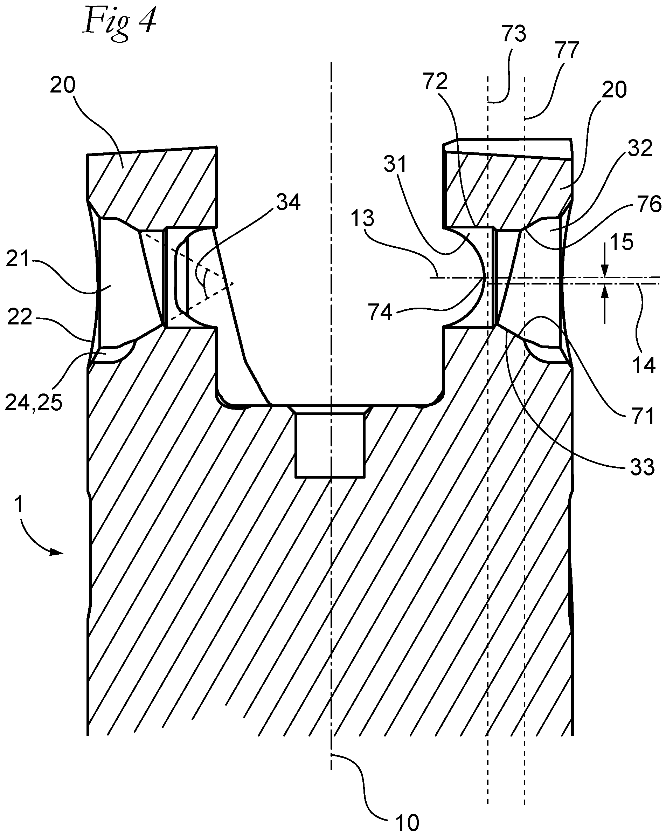

Figure 4 is a cross-sectional view of an embodiment of an exchangeable head drill support body 1, taken along the longitudinal axis 10. The respective non-threaded through hole 21 is defined by a respective inner peripheral surface 71. This inner peripheral surface 71 may comprise a number of part surfaces. Together, as the inner peripheral surface 71, these part surfaces constitute the limitation of the non-threaded through hole 21. Each of the inner peripheral surfaces 71 that defines the non-threaded through holes 21 has a respective first portion 31 and a respective second portion 32. The second portion 32 is located radially outside, with respect to the longitudinal axis 10, the respective first portion 31. These first portions 31 and second portions 32 are thus parts of the inner peripheral surface 71. However, the inner peripheral surface 71 may also comprise further parts surfaces.

In each of the towers 20, a respective first cross-section 72 of the respective first portion 31 of the inner peripheral surface 71 in a respective first tangential plane 73, with respect to the longitudinal axis 10, has a respective center of gravity 74. In other words, in cross-sectional views as seen from the longitudinal axis 10, the inner peripheral surface 71 forms a closed envelope of the non-threaded through hole 21. If the cross-section is made through the first portion 31, a closed envelope around the non-threaded through hole 21 represents the definition of the non-threaded through hole 21 at that tangential plane. Such a closed envelope has a center of gravity 74, which is positioned in the middle of the non-threaded through hole 21 and therefore represents the "position" of the non-threaded through hole 21.

A first radial axis 13 passes the respective center of gravity 74 of the respective first cross-section 72 of the respective inner peripheral surfaces 71. This first axis 13 is thus defined by the two first portions 31 in the two towers 20. In each of the towers 20, the respective second portion 32 of the respective inner peripheral surface 71 presents geometrical structures that are non-symmetric with respect to the first radial axis 13.

The basic idea of this design is to remove the threading from the towers themselves in order to facilitate that the towers are given essentially the same elastic bending properties in an axial direction. Instead, the threading is provided by a threaded insert that is put into the non-threaded through hole 21 of one of the towers 20. The threaded insert is, as will be described further below, intended to provide an offset between the threading and the non-threaded through hole 21, and the threaded insert is therefore asymmetric in its design. In order to hold the threaded insert in a correct position during mounting of the drill tip screw, geometrical structures that are not symmetric with respect to the intended position of the drill tip screw are provided in the non-threaded through hole 21. The position of the drill tip screw is represented by the above defined center of gravity.

Besides the possibility to give the towers equal bending properties, the use of a threaded insert also makes it possible to replace this insert, when it becomes worn-out. The threading of a prior art exchangeable head drill support body is usually a part that are exposed for heavy wear, and by just replace an insert instead of replacing an entire exchangeable head drill support body increases the life of the exchangeable head drill support body considerably.

It is indeed possible to provide the non-threaded through holes 21 through the towers in an angle with respect to the longitudinal axis that differs somewhat from a perpendicular angle. This may be used to induce a pre-stress in the drill tip screw upon mounting. However, a pre-stress is even easier to control by a linear offset between drill tip screw and threading. Therefore, in a preferred embodiment, in each of the towers 20, the respective non-threaded through hole 21 is directed perpendicular to the longitudinal axis 10.

The first cross-section 72 defines the space where the threading is to be provided and through which the front part drill tip screw is intended to be stuck. In order not to introduce unnecessary or unwanted forces or any uneven stresses on the threading, it is preferred if this space is symmetric and even more preferred circular symmetric. In other words, in a preferred embodiment, in each of the towers 20, the respective first cross-section 72 is symmetric around the respective center of gravity 74. And in an even more preferred embodiment, the respective first cross-section 72 is circular symmetric around the respective center of gravity 74.

One way to implement the geometrical structures that are non-symmetric with respect to the first radial axis 13 is to provide an offset between symmetry axes of the first portion 31 and the second portion 32. The second portion 32, located radially outside the first portion 31 is intended to receive the screw head of the drill tip screw. It is therefore preferred to have a second portion 32 that is generally symmetric around an axis 14 along which the drill tip screw is intended to be placed, for facilitate rotation of the drill tip screw. The same second portion 32 at the other tower 20 will instead receive the threaded insert. It is preferred if the threaded insert is prohibited to turn around the same axis as the threading, i.e. the first radial axis 13. An offset 15 in the symmetry axes between the first 31 and second portion 32 will provide such a rotation mitigation.

In other words, in one embodiment, in each of the towers 20, a respective second cross-section 76 of the respective second portion 32 of the respective inner peripheral surface 71 in a respective second tangential plane 77, with respect to the longitudinal axis 10, is symmetric around a second radial axis 14. The second radial axis 14 is offset by a non-zero distance 15 from the first radial axis 13. In a further embodiment, in each of the towers 20, the respective second cross-section 76 is circular symmetric around the second radial axis 14.

In order to achieve an accurate axial position of the drill tip screw and at the same time facilitate a smooth mounting, the screw head of the drill tip screw is typically provided with a conical part in the direction towards the threading of the drill tip screw. As mentioned above, the second portion 32 is intended to receive the screw head of the drill tip screw. The second portion 32 is therefore preferably designed to receive such a screw head in a smooth manner. To this end, in a preferred embodiment, in each of the towers 20, the respective second portion 32 of the respective inner peripheral surfaces 71 of the non-threaded through hole 21 is at least to a part shaped as a frustum of a cone 33.

When using screws that are exposed for varying forces during operation for fastening of different object, e.g. mounting a drill tip by a drill tip screw, it may happen that the screw unwinds during operation. It has, however, been found that by using a conically shaped interaction surface with a relatively steep inclination between the screw and the seat for the screw, such loosening tendencies may, at least to a part, be mitigated. In other words, in a preferred embodiment, the frustum of a cone 33 has a cone opening angle 34 within the range of 45 - 90 degrees. In an even more preferred embodiment, the cone opening angle 34 is within the range of 55 - 65 degrees.

Another way to implement the geometrical structures that are non-symmetric with respect to the first radial axis 13 is to provide retaining features counteracting a rotation. Such approach can be used alone or in combination with the above offset ideas.

In one embodiment, in each of the towers 20, the respective second portion 32 of the respective inner peripheral surface 71 of the non-threaded through hole 21 comprises a geometrical retaining feature 24. The geometrical retaining feature 24 is configured to be engageable with a threaded insert to prevent rotation thereof in the non-threaded through hole 21. The geometrical retaining feature 24 is thus intended to interact with a threaded insert that is inserted into the non-treaded through hole 21 radially inwards from the outer side of the tower 20. To this end, in a preferred embodiment, the geometrical retaining feature 24 is provided in the respective inner peripheral surface 71 in vicinity of an outer, with respect to the longitudinal axis 10, edge 22 of the non-threaded through hole 21.

The geometrical retaining feature 24 is thus intended to constrain any rotation of the threaded insert, and one way to accomplish this is to provide a structure that breaks the circular symmetry in a drastic manner. A narrow feature provided perpendicular to the symmetry axis may advantageously be used for this purpose. In other words, in one embodiment, the geometrical retaining feature 24 is a narrow recess 25 in the inner peripheral surface 41 at the outer edge 22 of the non-threaded through hole 21.

In one embodiment, the respective second portion 32 of the respective inner peripheral surface 71 may indeed be symmetric with respect to the first radial axis 13, except for the geometrical retaining feature 24. However, such a solution would imply that the part of the non-threaded through hole 21 that is defined by the first portion 31 has to have a diameter that is considerably larger than the diameter of the drill tip screw intended to be inserted. This will thus reduce the strength of the towers and is presently considered as a possible but not preferred embodiment. The most preferred embodiment is to combine both the symmetry offset and the geometrical retaining feature. The geometrical retaining features can in such embodiments also serve as a positioning marking, which may be advantageous during the mounting procedure.

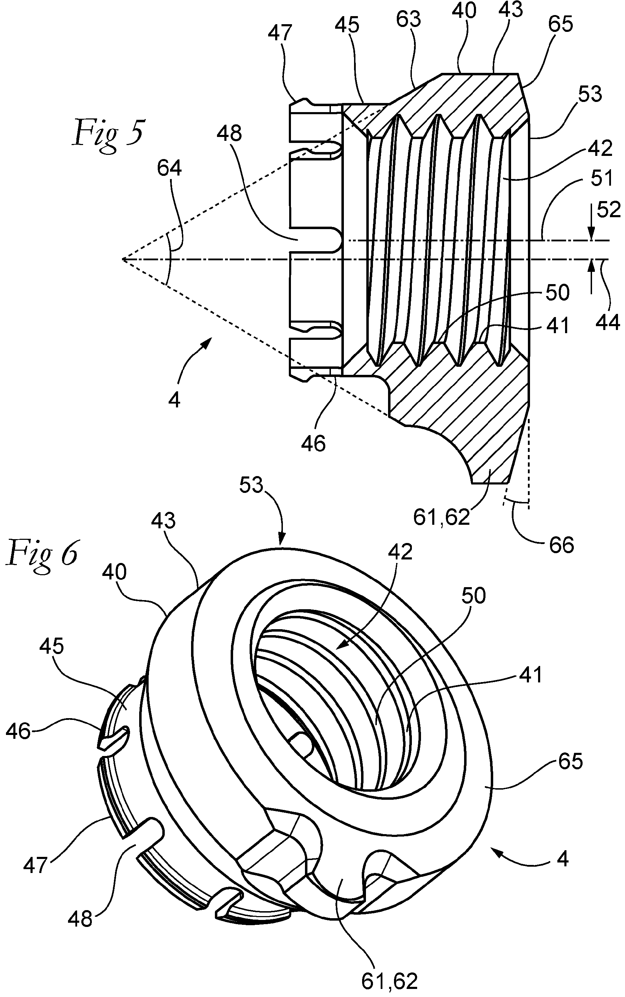

As indicated above, the exchangeable head drill support body is intended to be supported by a threaded insert. Figure 5 illustrates schematically a cross-sectional view of an embodiment of a threaded insert 4 for an exchangeable head drill. This threaded insert 4 can be provided by the manufacturer of the exchangeable head drill support body or by any external party. However, to ensure a proper operation, the design of at least some features have to match each other. Some features of the exchangeable head drill support body therefore have to be matched by corresponding interacting features of the threaded insert 4. A fully operating exchangeable head drill will require both these components, but since they may be provided by different providers, both parts have to be defined separately.

The threaded insert 4 comprises an outer peripheral surface 40 comprising at least a first part 43 with a general symmetry with respect to a first insert axis 44. The symmetry does not have to be perfectly complete, as will be discussed further below. The threaded insert 4 further comprises an inner peripheral surface 41 defining a circular hole 42, with respect to a second insert axis 51, with an inner threading 50. The first insert axis 44 and the second insert axis 51 are parallel but offset by a non-zero offset distance 52.

There is thus a symmetry offset between at least a part of the outer peripheral surface 40 and the threading 50. The outer peripheral surface 40 is intended to interact with a same type of surface as the screw head of the drill tip screw is intended to interact with. This implies that the outer peripheral surface 40 will be centered in a same manner as the screw head of the drill tip screw. However, in order to provide an offset distance to provoke a pre-stress on the drill tip screw, the threading 50 has to be offset from the symmetry of the outer peripheral surface 40.

If the exchangeable head drill support body is provided with geometrical retaining features, the threaded insert should be provided with features for interaction therewith. To this end, in one embodiment the threaded insert comprises an insert geometrical feature 61, at a first axial end 53 of the threaded insert 4. The insert geometrical feature 61 is configured to be engageable with an exchangeable head drill support body.

The geometrical retaining features of the exchangeable head drill support body should not obstruct the turning of a screw head. This means that the geometrical retaining features preferably are in the shape of recesses. A threaded insert 4 is not intended to rotate in the towers of the exchangeable head drill support body. A threaded insert 4 suitable for interacting with the recesses may therefore present parts that protrudes out from a rotationally symmetric outer surface. In other words, in a further embodiment, the insert geometrical feature 61 is a protrusion 62 directed radially with respect to the first insert axis 44.

The screw head of the drill tip screw is as mentioned above has preferably a conical portion. In order to fill up the same hole geometries, the threaded insert is preferably designed with a similar shape. In one embodiment, the first part 43 of the outer peripheral surface 40 is thereby partly shaped as a frustum of a cone 63. The cone has preferably an opening angle 64 that is within the range of 45 - 90 degrees, and more preferably within the range of 55 - 65 degrees.

As mentioned above, it is possible to have a threaded insert with an outer peripheral surface having a general symmetry with respect to the first symmetry axis 44 over the entire length. An insert geometrical feature 61 may then protect against rotation. However, such solutions are presently not considered as optimal concerning tower strength and threaded insert material.

In another embodiment, an inner, second part 45, of the threaded insert 4 is instead adapted to the threading. In other words, in a preferred embodiment, the outer peripheral surface 40 further comprises a second part 45 with a general rotational symmetry with respect to the second insert axis 51. This gives a resistance against rotation of the threaded insert 4 within the non-threaded through hole of the tower.

When the drill tip is to be mounted, a threaded insert 4 has to be provided into the exchangeable head drill support body. A drill tip screw is then inserted to engage with the threading. When changing drill tip, the drill tip screw is removed. In such a situation, it is of benefit if the threaded insert is maintained within the exchangeable head drill support body. This can e.g. be achieved by a retaining arrangement 46.

In one embodiment, the outer peripheral surface 40 comprises, at the second part 45, a retaining arrangement 46 configured for interacting with edges of a hole in an exchangeable head drill support body for prohibiting an axial movement. The retaining arrangement 46 is preferably configured to allow an easy inserting of the threaded insert into the non-threaded through hole of the tower, but where a retraction is prohibited or at least obstructed. Protruding parts that are provided to the second part in an at least to some degree elastic way may interact with an inner edge of the non-threaded through hole. To this end, in one embodiment, the retaining arrangement 46 comprises a flange 47, protruding radially outwards, with respect to the second insert axis 51. In a further embodiment, the resilient behavior of the flange 47 is improved by providing cuts 48 in the threaded insert 4. In other words, the retaining arrangement 46 preferably comprises cuts 48 in the threaded insert 4 parallel to the second insert axis 51.

Figure 6 is an elevational view of an embodiment of a threaded insert 4. By cutting the edges of the threaded insert 4 somewhat, the edges of the threaded insert 4 may be provided inside an outer envelope 41 of the towers of the exchangeable head drill support body while keeping a thicker goods of material in the central parts of the end of the threaded insert 4. The ideal shape would be to give an end surface 65 of the threaded insert 4 a spherical envelope having the same radius as the towers. However, any cutting of the edges of the screw head 12 will give some contribution.

In a preferred embodiment, at least a major part of an end surface 65 at the first axial end 53 of the threaded insert 4 is tapered radially outwards with an angle between 10 and 20 degrees and preferably between 13 and 17 degrees.

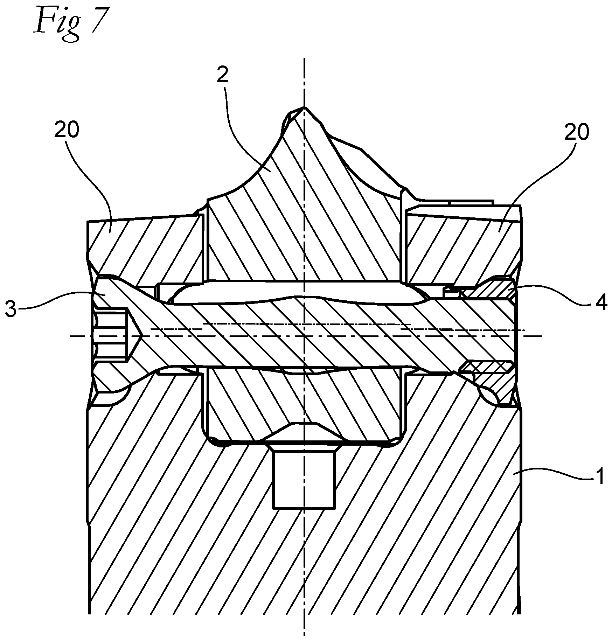

Figure 7 is a cross-section view of a drill tip screw 3 in an exchangeable head drill support body 1 and a threaded insert 4 fixating a drill tip 2. The illustration is made without any of the deformations that in reality are induced during mounting. The different parts therefore seem to partly overlap, where they in reality instead are deformed. The center portion of the drill tip screw 3 is mounted in pre-stressed contact with an inner surface defining a hole in the drill tip 2. This is indicated in the figure in that the surface of the center portion of the drill tip screw 3 is drawn below the surface of the hole in the drill tip 2. The threaded end of the drill tip screw 3 is also in reality in engagement with the inner threading of the threaded insert 4 inserted therein. This also induce the pre-stress of the drill tip screw 3.

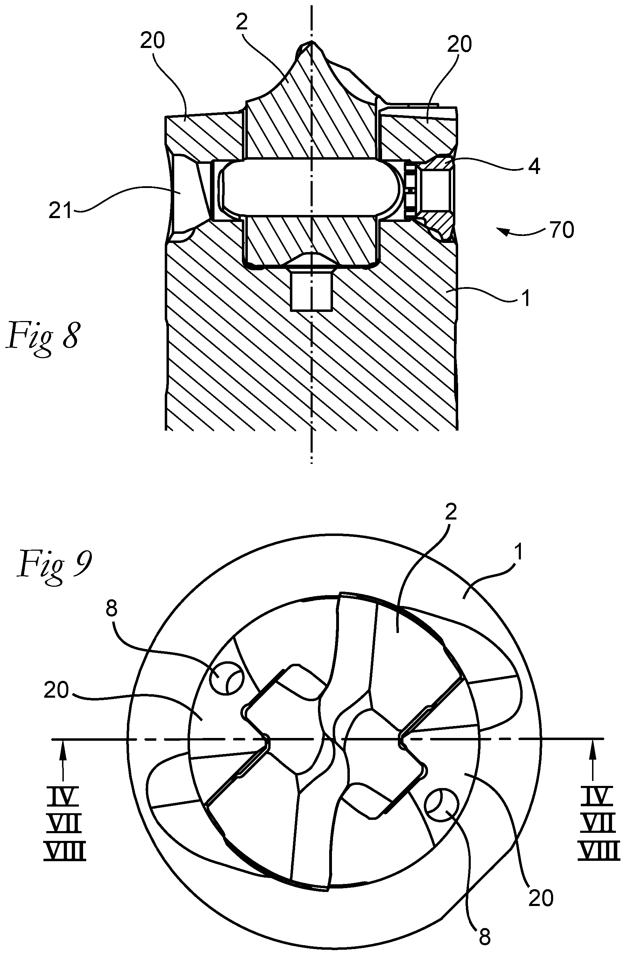

Figure 8 is a cross-section view of a drill tip 2 in an exchangeable head drill support body 1 and a threaded insert 4 before any drill tip screw is mounted. The threaded insert 4 is introduced in one of the holes 21 of the towers 20 and the drill tip screw is intended to be entered through the other hole 20.

Figure 9 is a view from the top of a drill tip 2 mounted in an exchangeable head drill support body 1. The cross-sections used for the views of figures 4, 7 and 8 are indicated.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1. An exchangeable head drill support body (1), extending along a longitudinal axis (10), comprising:
at an axially forward end (11), two axially forwardly extending towers (20);
wherein the towers (20) are spaced apart about the longitudinal axis (10) so as to define a jaw (17) configured for enabling releasably mounting of a drill tip (2) between at least a radially facing tip seat land (26) of the respective tower (20);
wherein each tower (20) having a respective non-threaded through hole (21) extended radially, with respect to the longitudinal axis (10) of the exchangeable head drill support body (1), wherein the respective non-threaded through hole (21) is defined by a respective inner peripheral surface (71);
wherein each of the inner peripheral surfaces (71) defining the non-threaded through holes has a respective first portion (31) and a respective second portion (32), located radially outside, with respect to the longitudinal axis (10), the respective first portion (31);
wherein, in each of the towers (20), a respective first cross-section (72) of the respective first portion (31) of the inner peripheral surface (71) in a respective first tangential plane (73), with respect to the longitudinal axis (10), has a respective center of gravity (74); and
wherein, in each of the towers (20), the respective second portion (32) of the respective inner peripheral surface (71) presents geometrical structures that are non-symmetric with respect to a first radial axis (13), passing the respective center of gravity (74) of the respective first cross-section (72) of the respective inner peripheral surfaces (71).

2. The exchangeable head drill support body according to claim 1, **characterized in that,** in each of the towers (20), the respective non-threaded through hole (21) is directed perpendicular to the longitudinal axis (10).

3. The exchangeable head drill support body according to claim 1 or 2, **characterized in that,** in each of the towers (20), the respective first cross-section (72) is symmetric around the respective center of gravity (74).

4. The exchangeable head drill support body according to any of the claims 1 to 3, **characterized in that,** in each of the towers (20), the respective first cross-section (72) is circular symmetric around the respective center of gravity (74).

5. The exchangeable head drill support body according to any of the claims 1 to 4, **characterized in that,** in each of the towers (20), a respective second cross-section (76) of the respective second portion (32) of the respective inner peripheral surface (71) in a respective second tangential plane (77), with respect to the longitudinal axis (10), is symmetric around a second radial axis (14), wherein the second radial axis (14) is offset by a non-zero distance (15) from said first radial axis (13).

6. The exchangeable head drill support body according to claim 5, **characterized in that,** in each of the towers (20), the respective second cross-section (76) is circular symmetric around the second radial axis (14).

7. The exchangeable head drill support body according to any of the claims 1 to 6, **characterized in that,** in each of the towers (20), the respective second portion (32) of the respective inner peripheral surfaces (71) of the non-threaded through hole (21) at least to a part being shaped as a frustum of a cone.

8. The exchangeable head drill support body according to any of the claims 1 to 7, **characterized in that,** in each of the towers (20), the respective second portion (32) of the respective inner surface (71) of the non-threaded through hole (21) comprises a geometrical retaining feature (24) configured to be engageable with a threaded insert (4) to prevent rotation thereof in the non-threaded through hole (21).

9. The exchangeable head drill support body according to claim 8, **characterized in that** the geometrical retaining feature (24) is provided in the respective inner peripheral surface (71) in vicinity of an outer, with respect to the longitudinal axis, edge of the non-threaded through hole (21).

10. The exchangeable head drill support body according to claim 9, **characterized in that** the geometrical retaining feature (24) is a narrow recess (25) in the inner peripheral surface (71) at the outer edge (22) of the non-threaded through hole (21).

11. The exchangeable head drill support body according to any of the claims 1 to 10, **characterized in that** the towers (20) have shapes that are mirrors to each other with respect to the longitudinal axis (10).

12. A threaded insert (4) for an exchangeable head drill, comprising:
an outer peripheral surface (40) comprising at least a first part (43) with a general symmetry with respect to a first insert axis (44);
an inner peripheral surface (41) defining a circular hole (42), with respect to a second insert axis (51), with an inner threading (50);
wherein the first insert axis (44) and the second insert axis (51) are parallel but offset by a non-zero offset distance (52).

13. The threaded insert according to claim 12, **characterized by** an insert geometrical feature (61), at a first axial end (53) of the threaded insert (4), configured to be engageable with an exchangeable head drill support body (1).

14. The threaded insert according to claim 13, **characterized in that** the insert geometrical feature (61) is a protrusion (62) directed radially with respect to the first insert axis (44).

15. The threaded insert according to any of the claims 12 to 14, **characterized in that** the outer peripheral surface (40) further comprises a second part (45) with a general rotational symmetry with respect to the second insert axis (51).

16. The threaded insert according to any of the claims 12 to 15, **characterized in that** the outer peripheral surface (40) comprises, at the second part (45), a retaining arrangement (46) configured for interacting with edges of a hole in an exchangeable head drill support body (1) for prohibiting an axial movement.

17. The threaded insert according to claim 16, **characterized in that** the retaining arrangement (46) comprises a flange (47), protruding radially outwards, with respect to the second insert axis (51).

18. The threaded insert according to claim 16 or 17, **characterized in that** the retaining arrangement (46) comprises cuts (48) in the threaded insert (4) parallel to the second insert axis (51).

19. The threaded insert according to any of the claims 12 to 18, **characterized in that** at least a major part of an end surface (65) at the first axial end (53) of the threaded insert (4) is tapered radially outwards with an angle (66) between 10 and 20 degrees, and preferably between 13 and 17 degrees.

20. An exchangeable head drill support arrangement (70), **characterized by** a threaded insert (4) according to any of the claims 12 to 19 inserted into a non-threaded through hole (21) of a tower (20) of an exchangeable head drill support body (1) according to any of the claims 1 to 11.
